# EUROPEAN PATENT APPLICATION

(11) **EP 1 873 557 A2**
(43) Date of publication of application: **02.01.2008**
(21) Application number: 07107190.6
(22) Date of filing: 30.04.2007
(51) Int. Cl.: G01V 8/12

(54) **Optical system and method for tamper detection**

(30) Priority: 30.06.2006 US 478101
(71) Applicant: General Electric Company, Schenectady, NY 12345 (US)
(72) Inventor: Koste, Glen Peter, Niskayuna, NY 12309 (US); Krug, Florian, 81243, Munich (DE); Erben, Christoph Georg, Clifton Park, NY 12065 (US); Dixon, Walter Vincent, Delanson, NY 12053 (US)
(74) Representative: Illingworth-Law, William Illingworth

(57) **Abstract**

A tamper detection system (10) is described as including at least one optical energy transmitter (20a) and a material (14) for transmitting optical energy from the at least one optical energy transmitter. The system further includes at least one support structure (16) adjacent the energy transmitting layer and at least one detector (22a) for detecting a change in energy distribution within the material. Also described is a container utilizing the system.

## Description

### BACKGROUND

The invention relates generally to security systems, and more specifically to techniques for detecting tamper and/or intrusion in secure environments, such as cargo containers, packages, doors and/or windows.

A wide variety of freights, such as commercial goods and equipment, quality assured equipment, confidential goods, sensitive material or equipment, expensive goods and so forth, are transferred from one place to other in standardized containers, such as cargo containers, crates, cardboard boxes, and/or packages. It is often difficult to adequately guard these containers while they are in transit or during storage. Further, some shipments originate in countries where port or rail yard security may be inadequate or non-existent. Thus, these containers are often left unattended for significant periods at locations in which theft or tampering can occur. Moreover, the sheer number of containers and boxes being shipped every day makes it difficult to adequately inspect each container at various checkpoints during transit or otherwise decreases the throughput at the checkpoints.

Additionally, in many instances such breaches or tampering are difficult to detect. Even a visual inspection of the exterior of a container is unlikely to reveal a breach. Shipping containers are subject to rough handling by cranes and other heavy equipment. Many of them have been damaged multiple times in the natural course of business and subsequently patched to extend their useful lives. Thus, upon inspection, a surreptitiously breached and patched container may appear same and the breached container is unlikely to be detected. Breaches through the floor are particularly hard to detect. The floor is visible from the outside only when containers are moved on or off a loading vessel, for example, a ship. It is difficult to inspect the floor at this time with video equipment and dangerous to inspect it manually. When the container is loaded its contents obscure breaches to an observer inside the container. Most of the transit time of a container is spent on the ground or stacked on another container where the floor is not visible.

Consequently, these containers are subject to tampering. A breached container can, for example, be looted or surreptitiously loaded with contraband, such as illegal drugs and/or weapons. The need for security during transit and storage requires proof that a container's integrity was maintained. In addition, theft of goods from private or public entities during transit or storage is also undesirable and may have significant economic impacts. Accordingly, reducing such illegal activities is highly desirable.

The current techniques of securing containers during transit and/or storage depend primarily upon placing a seal across the locking mechanism of a container door and/or one or more physical inspections of the container to verify the integrity of contents and absence of tampering. However, the above techniques are of limited value because an intruder may circumvent or corrupt inventory controls and cargo manifest delivery systems with assistance. Further, considering the enormous amount of shipped goods, a manual inspection may decrease the throughput if inspection is carried out extensively or the inspection may not be as extensive and efficient otherwise. Since a breach or circumvention of a cargo delivery system may have serious consequences, particularly for high sensitive applications, the failure tolerance is very low. Thus, it is necessary to secure the containers such that intrusion is preventable and/or detectable.

Apart from securing containers and freights, it may also be desirable to secure various premises such as residential areas, public installations, defense installations, private property and so forth. Current techniques for securing such premises include installing an alarm systems based on acoustic sensors, shock sensors, magnetic contacts and triple-biased door contacts in doors and/or windows of such secured areas. However, these techniques do not protect the whole assembly or detect just an effect of the intrusion (e.g. sound or vibration) and not the intrusion itself. These effects may also result from other events, thereby causing false alarms. Other techniques may detect only the opening of the door but generate no alarm if the locks are in place and the intrusion takes place by cutting through the door. Thus, an intrusion detection system is needed that provides a reliable full detection of unauthorized entrance through door and/or windows while minimizing the amount of false error messages.

It is therefore desirable to provide an efficient, reliable, cost-effective and automated tamper and/or intrusion detection system for cargo containers, packages, doors and/or windows. It is also desirable to provide tamperproof containers, packages, doors and/or windows.

### BRIEF DESCRIPTION

The invention includes embodiments that relate to a tamper detection system that includes at least one optical energy transmitter, a material for transmitting optical energy from the at least one optical energy transmitter, at least one detector for detecting optical signals transmitted from the at least one optical energy transmitter through the material, and a data processing device capable of correlating a reduction in the strength of an optical signal transmitted through the material due to an intrusion in the material.

The invention includes embodiments that relate to a container that includes a plurality of walls defining an enclosure and a tamper detection system coextensive with at least one of the walls. The tamper detection system includes at least one optical energy transmitter, a material for transmitting optical energy from the at least one optical energy transmitter, at least one detector for detecting optical signals transmitted from the at least one optical energy transmitter through the material, and a data processing device capable of correlating a reduction in the strength of an optical signal transmitted through the material due to an intrusion in the material.

The invention includes embodiments that relate to a method for detecting breaches in a container, including providing a tamper detection system. The tamper detection system includes at least one optical energy transmitter, a material for transmitting optical energy from the at least one optical energy transmitter, and at least one detector for detecting a change between an optical signal transmitted from the at least one optical energy transmitter and an optical signal transmitted through the material due to an intrusion in the material. The method further includes assigning an initial baseline optical transmission measurement for the material, associating a tolerance level to the initial baseline optical transmission measurement, and measuring additional baseline optical transmission measurements for the material to ascertain whether any of the additional baseline optical transmission measurements is outside of the tolerance level.

These and other advantages and features will be more readily understood from the following detailed description of preferred embodiments of the invention, provided by way of example only, that is provided in connection with the accompanying drawings.

### BRIEF DESCRIPTION OF THE DRAWINGS

FIG. 1 is a schematic view of an intrusion detection system constructed in accordance with an embodiment of the invention.
FIG. 2 is a cross-sectional view taken along line II-II of FIG. I .
FIG. 3 is a cross-sectional view of a portion of an intrusion detection system constructed in accordance with an embodiment of the invention.
FIG. 4. is a cross-sectional side view of a portion of an intrusion detection system constructed in accordance with an embodiment of the invention.
FIG. 5 is a schematic representation of an intrusion detection system constructed in accordance with an embodiment of the invention.
FIG. 6 is a schematic representation of an intrusion detection system constructed in accordance with an embodiment of the invention.
FIG. 7 is a schematic representation of optical flow paths of an intrusion detection system constructed in accordance with an embodiment of the invention.
FIGS. 8a - 8c are schematic representations of time-spaced optical flow paths of an intrusion detection system constructed in accordance with an embodiment of the invention.
FIGS. 9 and 10 illustrate optical signal losses through, respectively, an uncoated and a coated optical energy transmitting material constructed in accordance with an embodiment of the invention.

### DETAILED DESCRIPTION

Embodiments of the invention are directed to tamper and/or intrusion detection systems that may be useful in a variety of security applications. Though the present discussion provides examples in the context of cargo containers, packages, doors and/or windows, one of ordinary skill in the art will readily comprehend that the application of these techniques in other contexts is well within the scope of the present disclosure.

Approximating language, as used herein throughout the specification and claims, may be applied to modify any quantitative representation that could permissibly vary without resulting in a change in the basic function to which it is related. Accordingly, a value modified by a term or terms, such as "about", may be not to be limited to the precise value specified, and may include values that differ from the specified value. In at least some instances, the approximating language may correspond to the precision of an instrument for measuring the value.

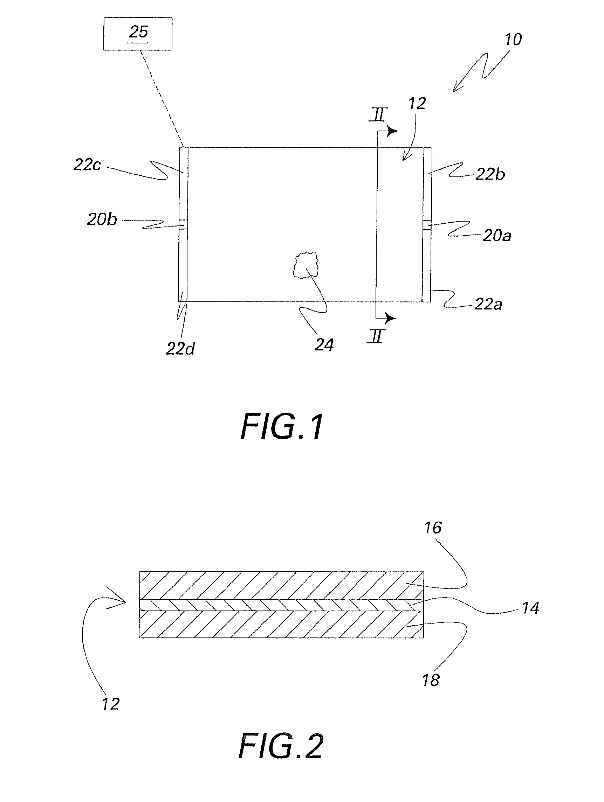

With specific reference to FIGS. 1 and 2, there is shown an intrusion detection system 10 including an optical energy transmitting mechanism 12. The system 10 includes optical energy emitters 20a and 20b and optical energy collectors, or detectors, 22a-d. The optical energy transmitting mechanism includes an optical energy transmitting material 14 sandwiched between first and second support structures 16, 18. The support structures 16, 18 may be formed of wood or AZDEL®, or any other suitable supporting material. The optical energy emitters 20a and 20b include an optical energy source for transmitting optical energy within a certain range through the optical energy-transmitting material 14. The optical energy transmitted by the optical energy emitters 20a and 20b may be radiation in the wavelength range of between about 200 nanometers and about 2000 nanometers; however, it should be appreciated that any suitable range of optical energy may be transmitted. Suitability in this context would likely take into account the ability to receive the range of optical energy and the ability to detect changes in the strength of optical signals within the range of optical energy. The detectors 22a-d are configured to detect a change in energy distribution within the optical energy transmitting material 14. The energy source may be, for example, a light source, a current source, or any other source of energy. The optical energy transmitted through the transmitting material 14 creates an energy distribution profile within the optical energy-transmitting material 14 that generally doesn't fluctuate over time. In certain embodiments, the energy distribution profile may be uniform. It should be appreciated that there will be gradual changes to the energy distribution profile due to changes in material property and damage. Such changes can be calibrated out. Further, the energy source and/or the detector(s) may exhibit short term sensitivities (e.g. thermal), which also may be compensated for.

It should be appreciated that the system 10 can function with only one supporting structure 16 or 18. While the use of a sandwich structure of supporting structures 16 and 18 allows for the use of an inexpensive, thin transmitting material 14 to be used, a more expensive, thicker transmitting material may be used which would obviate the need for two supporting structures.

As shown, the optical energy emitters 20a and 20b are positioned at opposite ends of the transmitting material 14. Specifically, the optical energy emitter 20a is at one end of the transmitting material 14 along with the detectors 22a and 22b, while the optical energy emitter 20b is at the opposite end of the transmitting material 14 along with the detectors 22c and 22d. Through this arrangement, the detectors 22a and 22b receive optical energy through the transmitting material 14 from the optical energy emitter 20b and the detectors 22c and 22d receive optical energy through the transmitting material 14 from the optical energy emitter 20a. An opening 24 in the transmitting material 14 will reflect in a decreased amount of optical energy received by the detectors 22a-d.

The optical energy transmitting material 14 may be made of at least a partially optically transmissive material, such as polycarbonate (PC), including LEXAN®, polyethylene (PE), polypropylene (PP), polystyrene (PS), foil, or glass. In certain embodiments, the optical energy transmitting material 14 may be optimized to minimize energy loss and to minimize power consumption. For example, the optical energy transmitting material 14 may be doped with a fluorescent material, such as dyes and/or quantum dots, to minimize the optical attenuation. The optical energy transmitting material 14 may be formed through any suitable method, including, for example, roll coating, dip coating, spray coating, spin coating, and core extrusion. The material should exhibit optical properties such that a maximum allowable optical signal loss is sufficiently low to enable the material to remain useful at predetermined wavelengths. Generally, the optical energy transmitting material 14 should retain a maximum allowable optical signal loss in a range between about 7.0 dB/m and about 1.0 dB/m.

Additionally, the optical energy transmitting material 14 may be coated on one or more surfaces with an energy reflecting material to minimize energy losses and capture a greater portion of energy within the optical energy transmitting material 14. For example, based on the type of source employed, a light reflecting material or an insulation material may be used for the coating. As will be appreciated by one skilled in the art, the optical energy transmitting material 14 may be fabricated as a foam, a film, a foil, a plate, or other substrate configuration and may be disposed on or within a surface of a container, a package, a door, or a window that is vulnerable to breach. It should be noted that, the position (external or internal) of the optical energy transmitting material 14 with respect to the surface vulnerable to breach (breachable surface) may be based on the application requirements. As used herein, the term "breachable surface" means a surface vulnerable to breach, tamper and/or intrusion.

The detectors 22a-d may be, for example, light-sensing devices for sensing a change in light intensity (flux), or any other device configured to detect a change in the energy distribution within the optical energy transmitting material 14. Alternatively, the detector may be configured to detect and measure the level of energy distribution within the optical energy transmitting material 14 at any given instant. The measured energy distribution may then be compared against the normal level of energy distribution (threshold value) or a previous measurement via acquisition circuitry provided internal or external to the detectors 22a-d and a change may thereby be detected.

A data processing device 25 is placed in communication with the detectors 22a-d. The data processing device 25 is shown in communication with detector 22c for ease of illustration, but it should be fully appreciated that the data processing device 25 is in communication with each of the detectors 22a-d. The data processing device 25 is capable of correlating a reduction of an optical signal transmitted through the transmitting material 14 with an intrusion in the material 14.

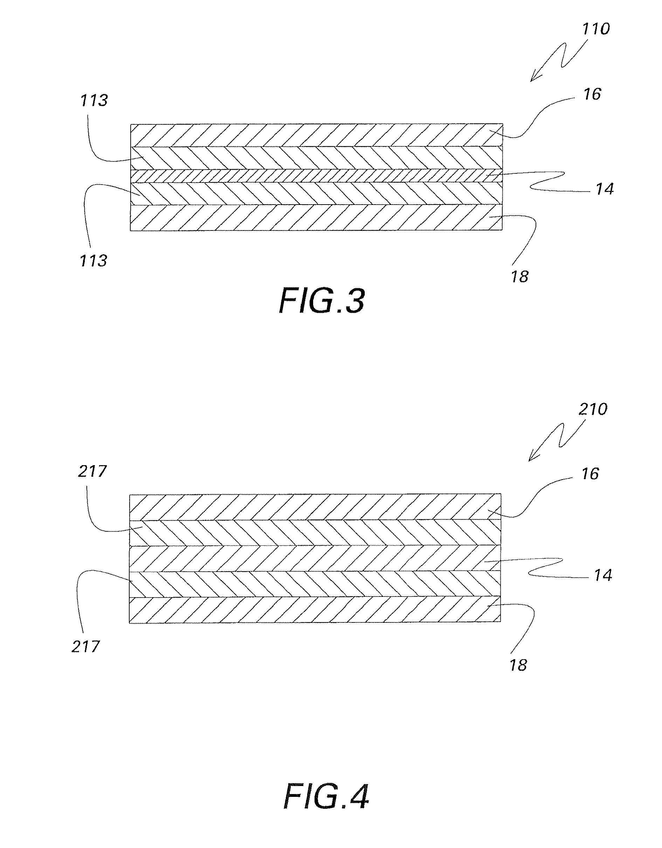

Referring now to FIG. 3, a portion of a tamper and/or intrusion detection system 110 is shown. The system 110 differs from the system 10 (FIGS. 1 and 2) in that system 110 includes a pair of protective layers 113 sandwiching the optical energy transmitting material 14 and within the support structures 16, 18. The protective layers 113 provide physical protection against damage to the optical energy transmitting material 14. In addition, the protective layers 113 may serve as cladding layers for keeping light in the optical energy transmitting material 14. If serving as a cladding layer, the protective layers 113 need a refractive index is lower than the refractive index of the optical energy transmitting material 14. Additionally, the protective layers 113 may include adhesive properties.

FIG. 4 depicts a portion of a tamper and/or intrusion detection system 210. The system 210 includes coating layers 217 sandwiching the optical energy transmitting material 14 and within support structures 16, 18. The coating layers 217 serve to minimize energy losses and allow capture of a greater portion of energy within the optical energy transmitting material 14. The coating layers 217 may also include an adhesive for adhering the optical energy transmitting material 14 to the support structures 16, 18.

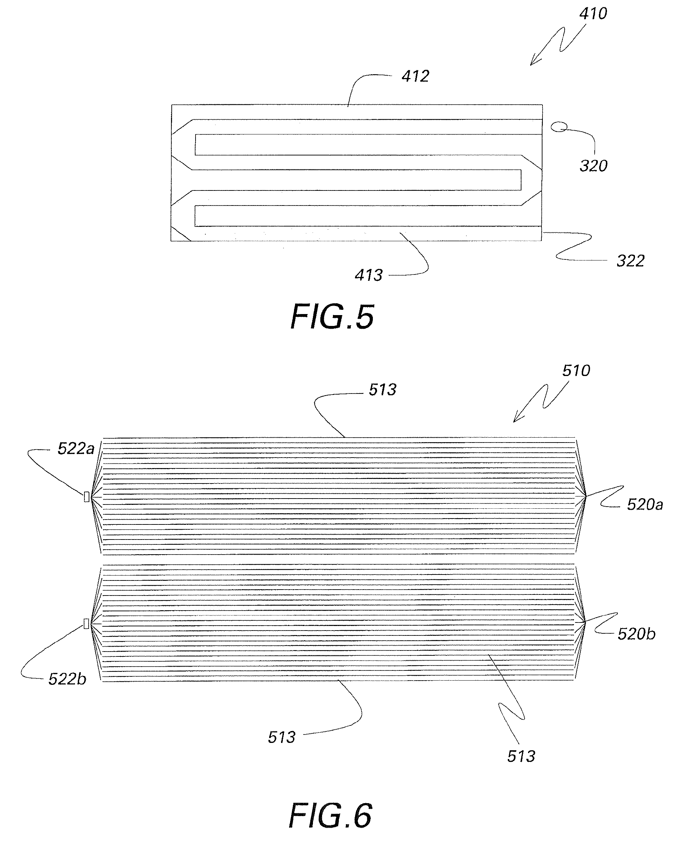

FIG. 5 illustrates a tamper and/or intrusion detection system 410 including an optical energy emitter 320 and an optical collector or detector 322. The system 410 further includes an optical waveguide 413 extending between the emitter 320 and the detector 322 within the optical receiving mechanism 412. As shown, the optical waveguide 413 is presented in a labyrinthine pattern between the emitter 320 and the detector 322. It should be appreciated that any pattern which allows the optical waveguide 413 to extend across the optical receiving mechanism 412 may be utilized.

FIG. 6 illustrates a tamper and/or intrusion detection system 510 including a pair of optical energy emitters 520a and 520b and a pair of optical collectors or detectors 522a and 522b. The system 510 further includes a plurality of optical waveguides 513 extending between the emitter 520a and the detector 522a and extending between the emitter 520b and the detector 522b within the optical receiving mechanism.

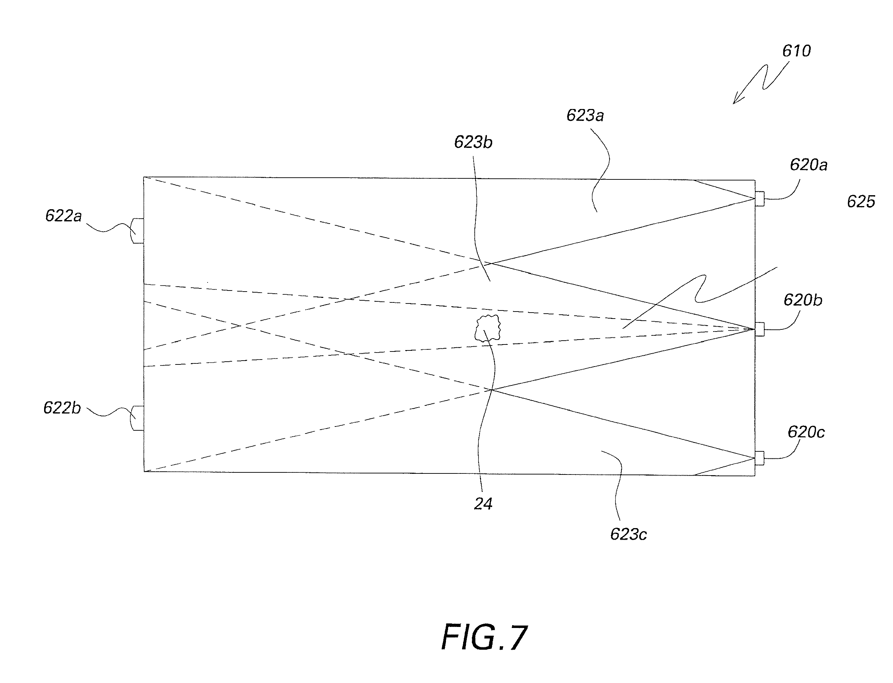

FIG. 7 illustrates optical flow paths of an intrusion detection system 610 in accordance with embodiments of the invention. The system 610 includes three optical emitters 620a-c and two optical collectors 622a-b. Each of the optical emitters 620a-c emits an optical signal, which extends through a portion of the optical receiving mechanism. Specifically, optical signals from the optical emitter 620a form an optical flow path 623a; optical signals from the optical emitter 620b form an optical flow path 623b; and, optical signals from the optical emitter 620c form an optical flow path 623c. As illustrated, an opening 24 is positioned such that a portion 625 of the optical flow path 623b will extend over the opening 24, thereby causing a reduced collection of optical signals from the optical flow path 623b.

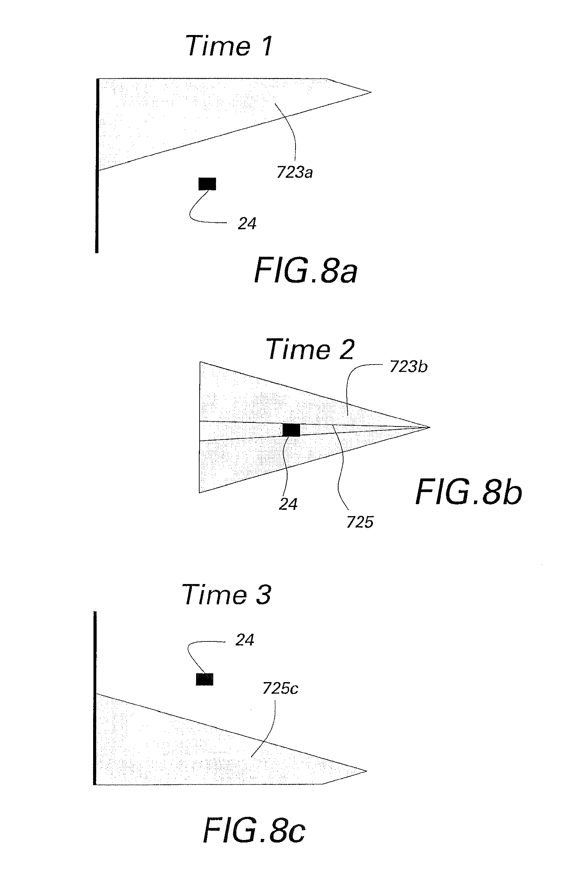

Alternatively, and with specific reference to FIGS. 8a-c, there is shown time-spaced optical flow paths. Instead of sending optical signals from a plurality of optical emitters simultaneously, optical signals are emitted from optical emitters in a stepwise fashion, separating the optical flow paths in time so there is minimal overlap of the optical flow paths. As shown in FIGS. 8a and 8c, optical flow paths 723a and 723c do not extend over the opening 24 and therefore there is no reduction in optical signals collected by the optical collectors. In FIG. 8b, however, a portion 725 of the optical flow path 723b extends over the opening 24, and thus there is a reduction in the optical signals collected by the optical collectors.

Over time, material properties can change due to chemical properties or physical damage. When the system is armed, a baseline measurement may be taken. The person arming the system makes an assertion that the detector is free from breaches. From the time the system is armed until it is disarmed, changes from the baseline are sought. Should there be nail holes or other damage caused to the system, the baseline calibrates these effects out. It may also be required that a change from a previous baseline must be within a certain tolerance to prevent the person arming from making a false declaration of integrity. Thus, upon an initial baseline measurement being taken of the optical transmission characteristics of the transmitting material, a tolerance level is associated with that initial baseline measurement. Subsequent baseline measurements are calibrated against the initial baseline measurement to ascertain whether they remain within the tolerance level associated with the initial baseline measurement.

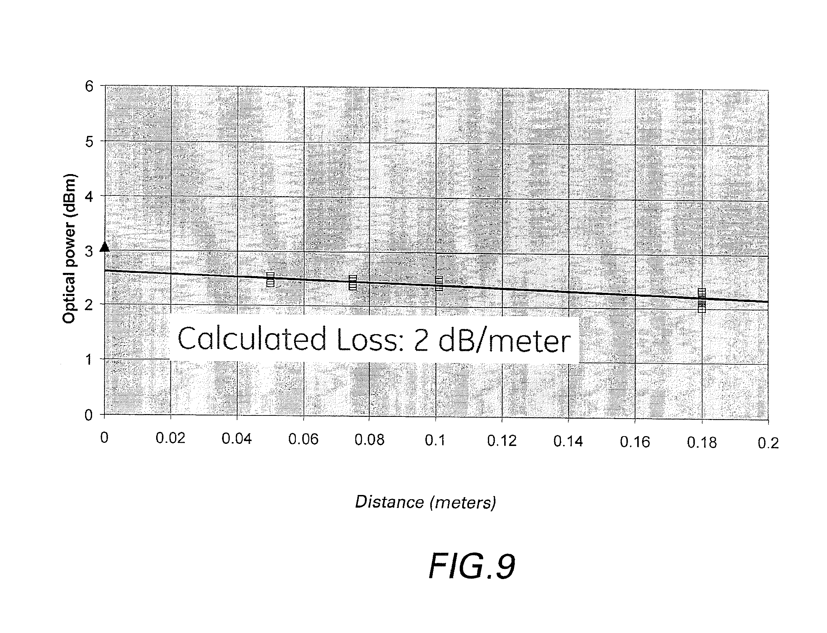

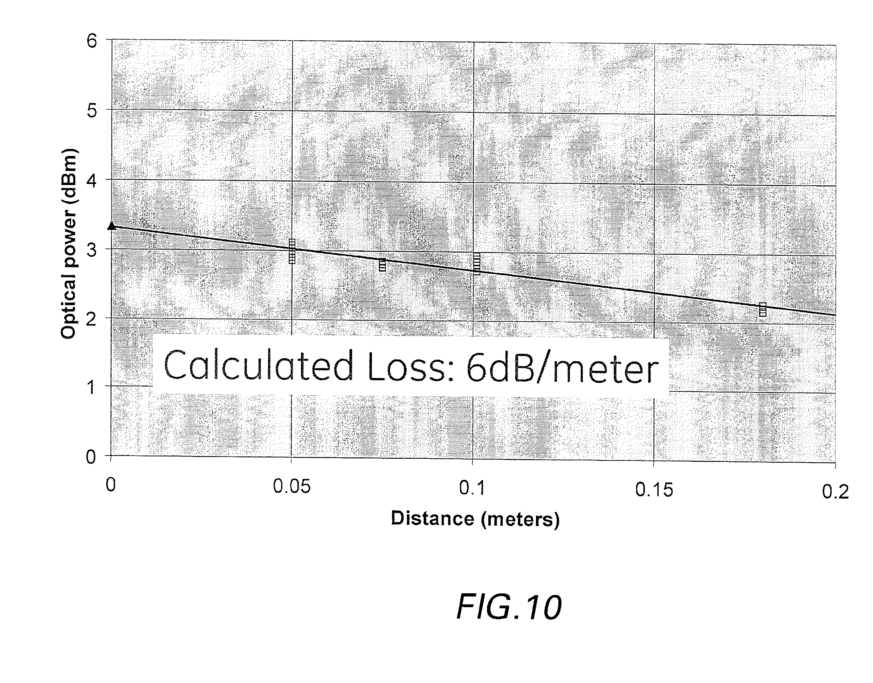

Referring specifically to FIGS. 9 and 10, next will be described an experiment using an embodiment of the invention. A single-mode fiber coupled to a 835 nm wavelength laser was used as an optical energy emitter. A silicon photocell was used as an optical energy collector. Four different sample lengths of the optical energy transmitting material were measured to cancel out any coupling losses. Ten measurements were taken for each sample length. For each of the measurements, the single-mode fiber was relocated. The optical energy transmitting material comprised polycarbonate at 125 µm thick. Each of the sample lengths was tested first as uncoated polycarbonate, and then tested with a silicon coating. FIG. 9 illustrates that a calculated loss of 2 dB/m occurred for the uncoated polycarbonate transmitting material. FIG. 10 illustrates that a calculated loss of 6 dB/m occurred for the silicon coated polycarbonate transmitting material.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. For example, while the optical energy emitters and optical energy collectors have been shown and described as being positioned on either end of an optical energy transmitting material, it should be appreciated that the emitters and collectors may be located at a single end. In such an embodiment, the opposing end would require a reflective coating. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A tamper detection system (10), comprising:
at least one optical energy transmitter (20a);
a material (14) for transmitting optical energy from said at least one optical energy transmitter;
at least one detector (22a) for detecting optical signals transmitted from the at least one optical energy transmitter through said material; and
a data processing device (25) capable of correlating a reduction in the strength of an optical signal transmitted through the material due to an intrusion in the material.

2. The system of claim 1, comprising at least one support structure (16) adjacent said material.

3. The system of claim 2, comprising a pair of support structures (16, 18) each positioned on an opposing side of said material.

4. The system of claim 1, wherein said material exhibits optical properties such that a maximum allowable optical signal loss is sufficiently low to enable the material to remain useful at predetermined wavelengths.

5. The system of claim 4, wherein the maximum allowable optical signal loss is in a range between about 7.0 dB/m and about 1.0 dB/m.

6. The system of claim 1, wherein optical energy transmitted by the at least one optical energy transmitter is in a wavelength range of between about 200 nanometers and about 2000 nanometers.

7. The system of claim 1, wherein said material comprises at least one waveguide (413) formed within the material.

8. The system of claim 1, comprising an array of optical energy transmitters configured for simultaneously transmitting optical energy.

9. The system of claim 1, comprising an array of optical energy transmitters configured for sequentially transmitting optical energy.

10. A container, comprising:
a plurality of walls defining an enclosure; and
a tamper detection system (10) coextensive with at least one of said walls, comprising:
at least one optical energy transmitter (20a);
a material (14) for transmitting optical energy from said at least one optical energy transmitter;
at least one detector (22a) for detecting optical signals transmitted from the at least one optical energy transmitter through said material; and
a data processing device (25) capable of correlating a reduction in the strength of an optical signal transmitted through the material due to an intrusion in the material.
